# EUROPÄISCHE PATENTANMELDUNG

(11) **EP 1 257 111 A1**
(43) Veröffentlichungstag der Anmeldung: **13.11.2002**
(21) Anmeldenummer: 01111043.4
(22) Anmeldetag: 08.05.2001
(51) Int. Cl.: H04M 1/02, H04M 1/725, H04M 1/247

(54) **Mobiles Terminal mit rückseitig angeordnetem Bedienfeld**

(71) Anmelder: Siemens Schweiz AG, 8047 Zürich (CH)
(72) Erfinder: Egloff, Heinz, 8904 Aesch bei Birmensdorf (CH); Fosco, Guido, 8957 Spreitenbach (CH)
(74) Vertreter: Berg, Peter, Dipl.-Ing.

(57) **Zusammenfassung**

Es wäre wünschenswert, die Bedienung eines mobilen Terminals so zu vereinfachen, dass ein Halten und komfortables Bedienen des Terminals mit einer einzigen Hand ermöglicht ist, was damit die hier der Erfindung zugrundeliegende Aufgabe ist.
Diese Aufgabe wird bei einem mobilen Terminal der eingangs genannten Art erfindungsgemäss dadurch gelöst, dass das Bedienfeld (26) auf einer dem Display (8) gegenüberliegenden Seite (24) angeordnet ist, d.h. wenn der Benutzer auf das Display schaut, befindet sich das Bedienfeld auf der dem Benutzer um 180° abgewandten Seite des Terminals.
Die dem Display gegenüberliegende Seite ist daher die in der Regel als Unter- oder Rückseite bezeichnete Seite, auf der meist auch der Batteriesatz angeordnet ist. Auf diese Weise ist es möglich, das Terminal zu halten und gleichzeitig mit dieser Hand die Eingabe- und Bedienhandlungen vornehmen zu können. Der Bediener des Terminals hat so die andere Hand frei um beispielsweise eine Tasche tragen oder sich in einem öffentlichen Verkehrsmittel festhalten zu können.
Das Bedienfeld hat zwei Funktionen. Einerseits arbeitet es als Fingerprint-Sensor zur Authentizierung des Benutzers und andererseits arbeitet es als Touch-Pad, wobei durch Bewegen des Zeigefingers auf der Oberfläche des Touch-Pads ein Mauszeiger auf dem Display gesteuert wird.

## Beschreibung

Die Erfindung bezieht sich auf ein mobiles Terminal, welches ein Bedienfeld für Bedien- und Dateneingabe-Handlungen und ein auf einer einem Benutzer zuwendbaren Seite angeordnetes Display aufweist.

Im Sinne der vorliegenden Erfindung werden unter einem mobilen Terminal Geräte wie ein Mobiltelefon, Webpads, Personal Digital Assistents, Laptops und dergleichen verstanden. Viele dieser Geräte zeichnen sich durch ihre sehr kompakte Bauweise aus, die es erlaubt, derartige Geräte mit einer Hand halten und benutzen zu können.

Während es bei einem Mobil-Telefon häufig so ist, dass beispielsweise ein Rechtshänder das Mobil-Telefon in der linken Hand hält und mit der rechten Hand bedient, z.B. eine Telefonnummer wählt, wird bei einem Personal Digital Assistent in der Regel die Bedienung beidhändig über eine vorhandene Tastatur oder über einen Schreibstift und ein berührungs- und bewegungssensitives Eingabefeld vorgenommen, wobei auch hierbei meist beide Hände erforderlich sind.

Es wäre daher wünschenswert, die Bedienung derartiger Terminals so zu vereinfachen, dass ein Halten und komfortables Bedienen des Terminals mit einer einzigen Hand ermöglicht ist, was damit die hier der Erfindung zugrundeliegende Aufgabe darstellt.

Diese Aufgabe wird bei einem mobilen Terminal der eingangs genannten Art erfindungsgemäss dadurch gelöst, dass das Bedienfeld auf einer dem Display gegenüberliegenden Seite angeordnet ist.

Die dem Display gegenüberliegende Seite ist daher die in der Regel als Unter- oder Rückseite bezeichnete Seite, auf der meist auch der Batteriesatz angeordnet ist. Auf diese Weise ist es möglich, das Terminal zu halten und gleichzeitig mit dieser Hand die Eingabe- und Bedienhandlungen vornehmen zu können. Der Bediener des Terminals hat so die andere Hand frei um beispielsweise eine Tasche zu tragen oder sich in einem öffentlichen Verkehrsmittel festhalten zu können.

Diesbezüglich ist es in Ausgestaltung der Erfindung daher vorgesehen, das mobile Terminal so zu dimensionieren, dass eine Trag- und Handhabbarkeit mit einer Hand ermöglicht ist, wobei das Bedienfeld so angeordnet ist, dass alle Punkte des Bedienfelds mit einem Finger der das Terminal haltenden Hand, vorzugsweise mit dem Zeige- oder Mittelfinger, erreichbar sind.

Ein für das vorgesehene mobile Terminal besonders geeignetes Bedienfeld ist ein Touch-Pad, auf dem mit einem Finger Bewegungen in der Ebene des Touch-Pads, per definitionem hier in der XY-Ebene, und Druckimpulse in Z-Richtung ausgeführt werden können.

Alternativ hierzu kann das Bedienfeld auch als Fingerprint-Erkennungssensor ausgestaltet sein, so dass eine Einhand-Zugriffsberechtigungs- und Gerätesteuerungsfunktion realisiert ist. Auf elegante Weise lässt sich so auch gleich das Problem einer möglicherweise unberechtigten Benutzung des Terminals ausschalten. In diesem vorliegenden Fall kann also der gleiche Sensor zur Berechtigungserkennung und zur Fingerpositionserkennung in der XY-Ebene und zur Druckimpulserkennung in Z-Richtung verwendet werden.

In besonderer weiterer Ausgestaltung dieses unmittelbar vorstehend genannten Merkmals kann weiter eine elektronische Auswerteeinheit für das Bedienfeld vorgesehen sein, die in Abhängigkeit von der Bewegungsgeschwindigkeit des Bedienfingers über die Betriebsart des Bedienfeldes, d.h. Touch-Pad-Funktion oder Fingerprint-Erkennungsmodus, entscheidet.

Die elektronische Auswerteeinheit kann dabei so programmiert sein, dass das Aufliegen eines Fingers für mehr als beispielsweise eine Sekunde den Fingerprint-Erkennungsmodus einschaltet und folglich das erfasste Bild des Fingerabdruckes mit einem oder mehreren gespeicherten Fingerabdrücken verglichen und so die Bedienerberechtigung festgestellt wird. Ein derartiger Schritt kann beispielsweise immer beim Einschalten und/oder bei der erneuten Bedienung des Terminals zwingend vorgeschrieben sein, weil sich die Touch-Pad-Funktion erst aktivieren lässt, wenn das mobile Terminal mit einem "berechtigten Finger" entriegelt worden ist.

Anschliessend daran führt die erfasste Bewegung eines Fingers in XY-Richtung oder eines Druckimpulses in Z-Richtung zum Einschalten oder Umschalten auf die Touch-Pad-Funktion. Es wird dann mittels der elektronischen Auswerteeinheit eine Schwerpunktsbildung des sich zunächst bewegenden und dann ruhenden Fingers vorgenommen, wobei damit eine bestimmte Funktion oder Taste auf einem im Display darstellbaren virtuellen Bedienfeld markierbar und mittels Druckimpuls in Z-Richtung auslösbar ist.

Ganz streng genommen erlaubt es eine derartige Ausgestaltung des mobilen Terminals sogar ganz auf eine separate Tastatur verzichten zu können, was Kosten und die ganze Dichtheits- und Verschmutzungsproblematik entschärfen würde. Die kommerzielle Umsetzbarkeit eines "tastaturlosen" mobilen Terminals hängt von der Akzeptanz der Benutzer ab, wobei beispielsweise die unter der Marke "PALM" am freien Markt erhältlichen Personal Digital Assistents ohne Tastatur sind und nur mit einem Schreibstift gesteuert werden und so durch Aktivierung entsprechender Display-Bereiche das Einblenden einer Tastatur erlauben. In ähnlich analoger Weise können bei einem erfindungsgemäss ausgestalteten mobilen Telefon so durch die Bewegung des Fingers auf dem Bedienfeld einzelne Buchstaben erfasst und SMS-Nachrichten erstellt werden.

Die Bedienerfreundlichkeit des mobilen Terminals wird besonders erhöht, wenn eine elektronische Auswerteeinheit für das Bedienfeld vorgesehen ist, die aufgrund einer innerhalb eines vorbestimmbaren Zeitfenster erstmaligen Betätigung des Bedienfeldes die Anzeige eines Grundbildes auf dem Display auslöst. So kann beispielsweise die einmalige Berührung des Bedienfeldes ausreichen, um die Anzeige des Grundbildes auf dem Display auszulösen. Das Grundbild kann beispielsweise das Abbild einer üblicherweise vorgesehenen Tastatur und ggfs. weiterer funktionaler Element, wie z.B. Menüsteuerung, Adressbuch, Mail-Fach- oder Mailbox-Abruf, sein. Ausgehend von diesem Grundbild kann der Bediener sein mobiles Terminal dann mit einer Hand halten und mit einem Finger dieser Hand bedienen.

Weitere vorteilhafte Ausgestaltungen der Erfindung sind den übrigen Unteransprüchen zu entnehmen.

Ausführungsbeispiele der Erfindung werden nachfolgend anhand der Zeichnung näher erläutert. Dabei zeigen:
- Figur 1: eine perspektivische Ansicht auf die Vorderseite eines Mobiltelefons mit auf dem Display angezeigten Grundbild; und
- Figur 2: eine Ansicht der Rückseite des Mobiltelefons gemäss Figur 1 in der rechten Hand eines Bedieners.

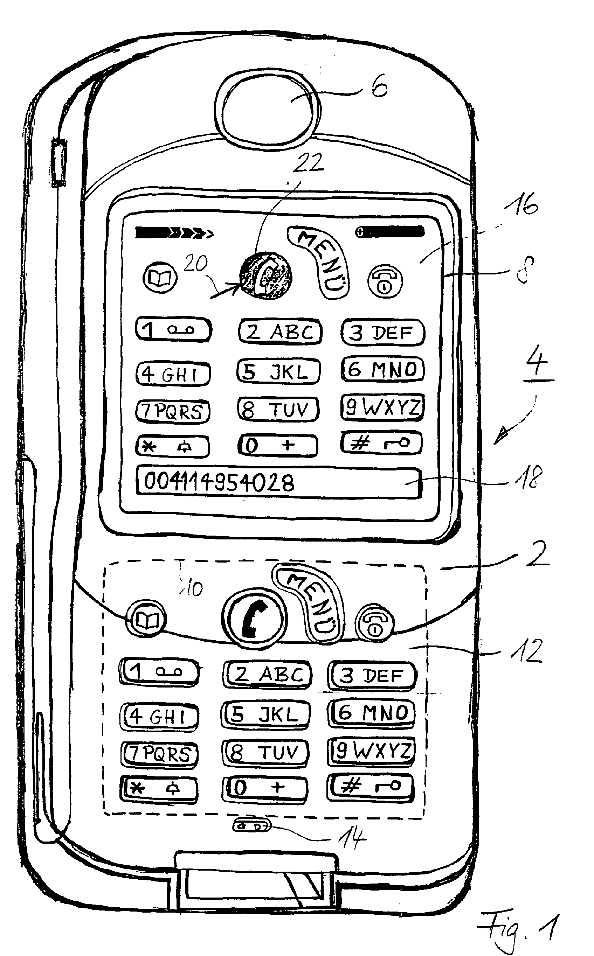

Figur 1 zeigt eine perspektivische Ansicht auf die Vorderseite 2 eines Mobiltelefons 4, welches auf der Vorderseite 2 über einen Lautsprecher 6, ein Display 8, eine von einer gestrichelten Linie 10 umgebene Tastatur 12 und ein Mikrophon 14 verfügt. Auffallend an dieser Ansicht ist ein Grundbild 16, das auf dem Display 8 dargestellt ist und im wesentlichen ein Abbild der Tastatur 12 darstellt.

Neben den diversen Nummertasten, die auf dem Display 8 dargestellt sind, ist in dieser Darstellung eine tatsächliche Anzeigezeile 18 vorgesehen, in der im vorliegenden Ausführungsbeispiel eine zuvor ausgewählte Telefonnummer angezeigt wird. Besonders hingewiesen werden soll auf einen Cursor 20, der einen Wählknopf 22 durch die Berührung farblich invertiert hat und damit anzeigt, dass der Wählvorgang aktuell eingeleitet werden kann. Wie weiter unten stehend noch erläutert werden wird, ist die Auswahl der Telefonnummer nicht durch die Betätigung der Tastatur 12 vorgenommen worden und auch der Wählvorgang wird nicht durch das Drücken des Wählknopfes in der Tastatur 12 eingeleitet werden.

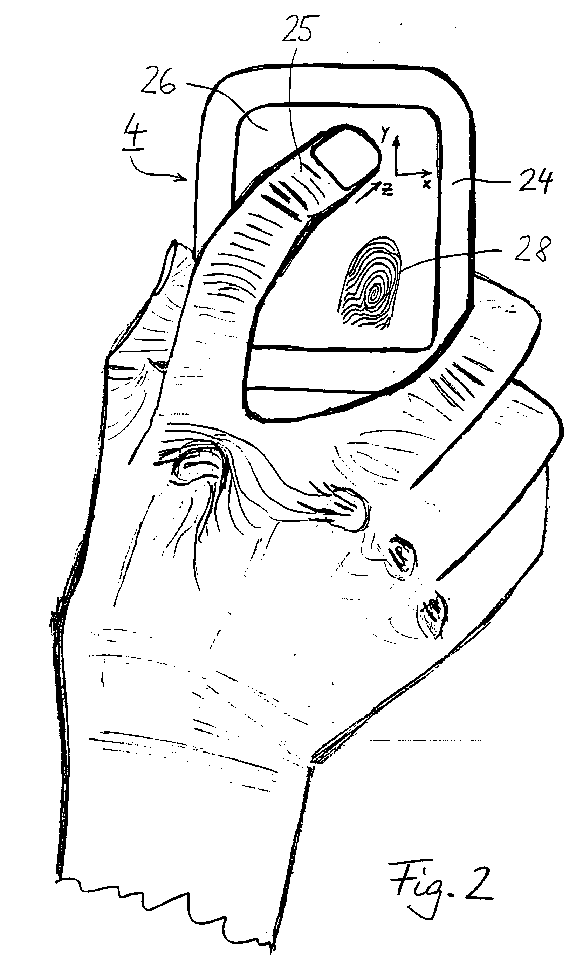

Stattdessen verfügt das Mobiltelefon 4, wie dies in der Figur 2 gezeigt ist, auf seiner Rückseite 24 über ein als Fingerprint-Sensor ausgestaltetes Bedienfeld 26, das zugleich auch wie ein Touch-Pad arbeitet kann. Zum Starten des Mobiltelefons 4 muss mittels des Bedienfeldes 26 ein Finger, hier vorliegend der Zeigefinger 25 der rechten Hand eines Gerätebedieners, auf das Bedienfeld 26 gedrückt werden.

Eine hier nicht weiter dargestellte Auswerteeinheit betreibt das Bedienfeld 26 im Fingerprint-Erkennungsmodus, wenn der Finger etwa mindestens eine Sekunde stationär auf der Oberfläche des Bedienfeldes 26 ruht, was durch einen Fingerabdruck 28 beispielhaft dargestellt werden soll. Stellt die Auswerteeinheit eine Übereinstimmung des Fingerabdrucks 28 mit einem zuvor gespeicherten Fingerabdruck fest, dann entriegelt die Auswerteeinheit das Mobiltelefon 4 und schaltet das Bedienfeld auf eine Touch-Pad-Funktion um und zeigt in dem Display 8 das Grundbild 16 an. Auch später. während des Betriebs kann das Mobiltelefon 4 bei bestimmten Anwendungen, z.B. Banktransaktionen oder anderen sicherheitsrelevanten Datentransfers, mittels der Auswerteeinheit das Bedienfeld 26 in den Fingerprint-Erkennungsmodus schalten und eine Authentizierung des Bedieners verlangen.

In der Touch-Pad-Funktion kann nun durch das Bewegen des Zeigefingers 25 in XY-Richtung auf der Oberfläche des Bedienfeldes 26 entsprechend der Cursor 20 auf dem Display 8 ebenfalls in XY-Richtung bewegt werden. Durch einen kurzen Druckimpuls in Z-Richtung kann dann das vom Cursor 20 durch Berührung farblich invertiert dargestellte Feld/Funktion ausgelöst werden. Auf diese Weise ist die in der Anzeigezeile 18 dargestellte Telefonnummer gewählt worden. In dem momentan gezeigten Betriebszustand gemäss Figur 1 genügt nun ein kurzer Druckimpuls des Zeigefingers 25 in Z-Richtung auf das Bedienfeld 26 um den Wählvorgang auszulösen, weil das Wählfeld 22 schon farblich durch Farbinvertierung hervorgehoben worden ist, also sozusagen markiert worden ist.

Auf diese Art und Weise können über das in Touch-Pad-Funktion geschaltete Bedienfeld 26 sämtliche Tasten und Funktionen der Tastatur 12 durch die Aufwahl auf dem Grundbild 16 bzw. weiterer dann entsprechend angezeigter Menübilder virtuell betätigt werden. Darüberhinaus ist beispielsweise auch die Generierung von SMS-Nachrichten möglich, indem mittels des Menü-Feldes der entsprechende Menüpunkt ausgewählt wird und die einzelnen Buchstaben und Ziffern der SMS-Nachricht durch das Ziehen von Linien mit vorbezeichneter Linienführung generiert werden. Ergänzend kann beispielsweise auch im Display 8 eine Schreibmaschinetastatur virtuell angezeigt werden, deren einzelne Zeichen mit dem Cursor 20 angesteuert und durch kurzen Druckimpuls ausgewählt werden können.

Auf diese Weise sind sämtliche Funktionen des Mobiltelefons 4 über das in der Touch-Pad-Funktion betriebene Bedienfeld 26 ausführbar. In der Konsequenz kann dies dazu führen, dass auf die gesamte von der gestrichelten Linie 10 umgebene Tastatur 12 verzichtet werden kann, was den Aufbau des Mobiltelefons 4 erheblich vereinfachen würde.

Das besonders Bestechende an dem vorstehend beschriebenen Mobiltelefon 4 ist jedoch die Tatsache, dass das Mobiltelefon 4 mit nur einer einzigen Hand gehalten und bedient werden kann und mit dem Bedienfeld 26, das über die elektronische Auswerteeinheit im Fingerprint-Erkennungsmodus oder in der Touch-Pad-Funktion betrieben werden kann, nur über ein einziges eingabesensitives Element verfügt.

### Bezugszeichenliste

- 2: Vorderseite
- 4: Mobiltelefon
- 6: Lautsprecher
- 8: Display
- 10: gestrichelte Linie
- 12: Tastatur
- 14: Mikrophon
- 16: Grundbild
- 18: Anzeigezeile
- 20: Cursor
- 22: Wählknopf
- 24: Rückseite
- 25: Zeigefinger
- 26: Bedienfeld
- 28: Fingerabdruck

## Patentansprüche

1. Mobiles Terminal (4), insbesondere Personal-Digital-Assistent (PDA) oder mobiles Telefon, welches ein Bedienfeld (26) für Bedien- und Dateneingabe-Handlungen und ein auf einer einem Benutzer zuwendbaren Seite (2) angeordnetes Display (8) aufweist, wobei das Bedienfeld (26) auf einer dem Display (8) gegenüberliegenden Seite (24) angeordnet ist.

2. Mobiles Terminal (4) nach Anspruch 1,
**dadurch gekennzeichnet, dass**
eine Trag- und Handhabbarkeit mit einer Hand vorgesehen ist, wobei das Bedienfeld (26) so angeordnet ist, dass alle Punkte des Bedienfelds (26) mit einem Finger (25) der das Terminal (4) haltenden Hand, vorzugsweise mit dem Zeige- oder Mittelfinger, erreichbar sind.

3. Mobiles Terminal (4) nach Anspruch 1 oder 2,
**dadurch gekennzeichnet, dass**
das Bedienfeld (26) als Touch-Pad ausgeführt ist.

4. Mobiles Terminal (4) nach einem der Ansprüche 1 bis 3,
**dadurch gekennzeichnet, dass**
das Bedienfeld (26) als Fingerprint-Erkennungssensor ausgestaltet ist.

5. Mobiles Terminal (4) nach Anspruch 4,
**dadurch gekennzeichnet, dass**
eine elektronische Auswerteeinheit für das Bedienfeld (26) vorgesehen ist, die in Abhängigkeit von der Bewegungsgeschwindigkeit des Bedienfingers (25) über den Betriebsmodus, d.h. Touch-Pad-Funktion oder Fingerprint-Erkennungsmodus, entscheidet.

6. Mobiles Terminal (4) nach einem der Ansprüche 1 bis 5,
**dadurch gekennzeichnet, dass**
eine elektronische Auswerteeinheit für das Bedienfeld (26) vorgesehen ist, die aufgrund einer innerhalb eines vorbestimmbaren Zeitfenster erstmaligen Betätigung des Bedienfeldes (26) die Anzeige eines Grundbildes (16) auf dem Display (8) auslöst.
